# EUROPÄISCHE PATENTSCHRIFT

(11) **EP 1 443 319 B1**
(45) Veröffentlichungstag und Bekanntmachung des Hinweises auf die Patenterteilung: **18.06.2008**
(21) Anmeldenummer: 04002204.8
(22) Anmeldetag: 02.02.2004
(51) Int. Cl.: G01N 21/71, F42B 33/06, F41H 11/12

(54) **Laseroptische Minensuchnadel zur berührungslosen Identifizierung von Minen und Explosivstoffen**
Laser optical mine detection probe for identifying mines and explosives without contacting
Détecteur laser-optique pour identifier des mines and des explosifs sans contact

(30) Priorität: 03.02.2003 DE 10304337
(43) Veröffentlichungstag der Anmeldung: 04.08.2004
(73) Patentinhaber: SECOPTA GmbH, 24118 Kiel (DE)
(72) Erfinder: Schade, Wolfgang, Prof. Dr., 38644 Goslar (DE); Holl, Gerhard, Dr., 50937 Köln (DE); Holl, Alfred , Dipl.-In. FH, 50739 Köln (DE); Bublitz, Jens, Dr., 23684 Pönitz (DE)
(74) Vertreter: Tönnies, Jan G.

(56) Entgegenhaltungen:
- EP-A- 0 305 556
- DE-A- 19 704 080
- FR-A- 2 778 238
- US-A- 4 870 244
- US-A- 5 379 103
- US-A- 6 150 630

## Beschreibung

Die Erfindung eine laseroptischen Minensuchnadel zur berührungslosen Klassifizierung und Identifizierung von Explosivstoffen, insbesondere zum Einsatz bei der Verifikation von Landminen unter Anwendung von Lasertechniken.

Die berührungslose online und *in situ* Klassifizierung verschiedener Explosivstoffe und Minenhüllenmaterialien ist ein nach wie vor ungelöstes Problem bei der Minensuche, sowohl im militärischen als auch im humanitären Bereich. Wesentlich hierbei ist die Aussage, ob es sich 100%-ig **nicht** um eine Mine handelt.

Jedes Jahr sterben weltweit 10.000 Menschen und weitere 15.000 werden schwer verletzt. Nach Schätzungen der UNO sind 60-100 Millionen Landminen verlegt und es ist Aufgabe der entwickelten Staaten, nach Beendigung eines Krieges die Nutzung der Landflächen durch Räumung der Minen wieder zu ermöglichen.

Eines der Hauptprobleme beim Räumen der Minen ist die zu hohe Falschalarmrate. Die Unterscheidung von anderen metallischen Teilen, insbesondere Blechdosen oder Munitionssplitter, benötigt mit den bisher bekannten Methoden viel Zeit. Eine besondere Schwierigkeit stellt die Verifikation von Kunststoff ummantelten Minen dar.

Eine Vielzahl unterschiedlicher Nachweisverfahren, wie biologische, biosensorische, chemische, akustische oder Radargestützte Techniken, eignet sich zwar zum generellen Aufspüren potentieller Minen- bzw. Sprengkörperverdachtspunkten. Das Problem aber ist, dass selbst durch Fusion verschiedener Methoden oder Detektoren zur Zeit nur eine tatsächliche Trefferquote von durchschnittlich 10 % bei der eindeutigen Verifikation von Minen im Erdreich erreicht wird.

Die Erfindung hat sich daher zur Aufgabe gestellt, eine Minensuchnadel zu schaffen, die es ermöglicht, insbesondere die bei Minen verwandten Materialien berührungslos, *in situ* und online vor Ort zu klassifizieren.

Dieses geschieht erfindungsgemäß durch Integration von Laserstrahlung in eine konventionelle und handgeführte Laserminensuchnadel. Durch diese Implementierung einer spektroskopischen Technologie in eine allseits akzeptiertes und weltweit übliches Sondierwerkzeug ist es möglich, die Oberfläche eines im Boden verborgenen Gegenstandes spektroskopisch zu klassifizieren, die Hülle des Gegenstandes mit dem Laserstrahl zu durchdringen und ebenfalls das Innere eines Hohlkörpers laserspektroskopisch zu analysieren. Damit ermöglicht dieses Verfahren eine eindeutige Verifikation von Gegenständen als Mine.

Die verwandte lichtinduzierte Materialablation eröffnet völlig neue Möglichkeiten zur berührungslosen Detektion und Klassifikation von Explosivstoffen und damit zur Entwicklung eines Verifikationssensors zur Minensuche. Insbesondere wird ein Verfahren vorgeschlagen, bei dem zunächst ein Plasma an der Oberfläche des Stoffes durch Aufbringen von Lichtimpulsen aus einer Laserlichtquelle erzeugt wird, darauf dann insbesondere die Spektralcharakteristik der von im Plasma gebildeten Verbindungen ausgesandten Energie erfasst wird und bei definierten Umgebungsbedingungen eine zeitintegrierte Beobachtung in Form der laserinduzierten Durchschlagsspektroskopie- (LIBS - engl. laser induced breakdown spektroskopy) - Intensitäten bei wenigstens zwei definierten Wellenlängen vorgenommen wird.

Das Untersuchen von Metallen ist beispielsweise in der Internetveröffentlichung Pittcom.omnibooksonline.com/2001/papers/0586.pdf bereits für Stahllegierungen beschrieben. Weiter ist aus den Patentschriften US 5,379,103, US 5,798,832, WO 95/30140 bereits die Verwendung einer Faseroptik zur Weiterleitung eines Lichtereignisses auf eine entfernt angeordnete Probe beschrieben, deren Verdampfungsspektrum sowie deren Fluoreszenzspektrum erfasst und zusammen zum Rückschluß auf das Vorhandensein organischer bzw. metallischer Verbindungen genutzt werden. In den Patentschriften WO 92/21957 (EP 0587609, DE 4118518), DE 3718672, WO95/30140, DE 4341462, US 4,645,342, US 5,798,832 sowie DE 4028102 wird ebenfalls die emittierte Strahlung eines laserinduzierten Plasmas des zu analysierenden Werkstoffes registriert. Der Schwerpunkt der in diesen Patenten beschriebenen Ausführungen liegt in der präzisen Ermittlung von Teilchendichten (Konzentrationen) einzelner Spezies in den zu untersuchenden Materialproben sowie deren genaue Elementzusammensetzung, beispielsweise von Verunreinigungen durch Spurenelemente bei der Stahlerzeugung oder bei der Sortierung und Charakterisierung von Metallen. Nachteilig bei diesen Verfahren ist jedoch die Voraussetzung der Erzeugung definierter Plasmazustände, die während einer Messung stets kontrolliert werden müssen; nur Plasmaparameter innerhalb eines bestimmten Toleranzbereiches sind zulässig. Nachteilig bei diesen Verfahren ist ferner die notwendige Aufnahme eines gesamten Emissionsspektrums über einen großen Wellenlängenbereich, teilweise auch noch zeitaufgelöst, die nur durch einen großen apparativen Aufwand bei der Detektion des Plasmaleuchtens sowie durch aufwendige und langsame Auswertealgorithmen zu erzielen sind. Im vorliegenden Verfahren hingegen, werden alle Anregungs- und apparativen Parameter der Plasmaerzeugung konstant gehalten, während die Plasmazustände von den untersuchten Materialien durchaus variieren können. Dieses wird erfindungsgemäß dadurch erreicht, dass das Verhältnis der immer von demselben Lichtpuls erzeugten lichtinduzierten Plasmaemission bei definierten Wellenlängen in unterschiedlichen Zeitbereichen gemessen wird. Apparativ bedingte Schwankungen fallen so bei der hier gewählten schnellen Datenaufnahme bzw. -auswertung heraus.

In den bisher beschriebenen Arbeiten zu LIBS bei der Materialanalyse werden immer Intensitäten oder Intensitätsverläufe einzelne atomarer Spektrallinien für die Analytik herangezogen. Explosivstoffe, Kunststoffe und Bodeninhaltsstoffe bestehen jedoch grundsätzlich aus den atomaren Elementen Kohlenstoff (C), Stickstoff (N), Wasserstoff (H) und Sauerstoff (O), so dass entsprechende spektrale Komponenten bei sämtlichen Materialien auftreten und daher eine eindeutige Klassifikation von beispielsweise Explosivstoff und Kunststoff durch Messung von LIBS Intensitäten mit den Merkmalen C, H, O, N Emission nicht möglich ist. Wird mit dem Laser unter atmosphärischen Bedingungen jedoch auf Explosivstoff oder Kunststoff ein Plasma gezündet, so werden Emissionen von im Plasmaprozess gebildeten Verbindungen wie z.B. dem CN bei 388 nm beobachtet. Aufgrund unterschiedlicher Absorptionsquerschnitte der laserangeregten Materialien werden unterschiedliche Plasmatemperaturen induziert, so dass der zeitliche Verlauf der CN Rekombination für eine Klassifikation von Materialien mit gleicher/ähnlicher atomarer Zusammensetzung als Klassifikationsmerkmal herangezogen werden kann. Nachdem mit der laserintegrierten Minensuchnadel ein, als Hindernis identifizierter Gegenstand, als Minenhüllenmaterial analysiert wurde, wird durch die Hülle laseroptisch ein Loch gebohrt. Dabei ist nicht, wie in der Patenschrift DE4138157 der gezielte Materialabtrag an der Metalloberfläche zur quantitativen Bestimmung der Schichtdicke, zu berücksichtigen, sondern ausschließlich die Durchdringung des Materials mit der Zielsetzung, die darunter liegenden andersartigen Substanzen in der oben beschriebenen Weise im Inneren des Hohlkörpers spektroskopisch zu untersuchen. Der Nachweis von Explosivstoff erfolgt dann durch zeitaufgelöste Detektion zum Beispiel der laserinduzierten CN Emission, wodurch gleichzeitig eine 100%-ige Identifizierung des Gegenstandes als Mine bzw. als nicht-explosionsfähiges Material gewährleistet wird.

In EP 0305556 wird eine Vorrichtung zum Auffinden und zur berührungslosen Klassifizierung von Minen und Explosionsstoffen mit einem Laserstrahlaustrittsrohr aus einem zylindrischen Körper mit einer Optik beschrieben. In DE 19704080 wird schließlich ein Minensuchgerät beschrieben, das an einem Nadelkopf eine Anzahl Minensuchnadeln aufweist, denen Druckmesssensoren zugeordnet sind.

Auf der Grundlage der lichtinduzierten Materialablation und anschließender Beobachtung der hiermit verbundenen Lichtemission des Materials kann aber vorliegend bereits in Verbindung mit miniaturisierten Laserlichtquellen ein Lasermessverfahren zur Klassifikation von verschiedenen Materialien, z. B. Bodeninhaltsstoffen, Kunststoffen, Metallen und Explosivstoffen, entwickelt werden, wenn zum Beispiel lediglich bei einer definierten, geeigneten Wellenlänge die emittierte Intensität der CN-Emission in definierten Zeitbereichen (z.B. zeitintegriert) beobachtet werden und als Klassifikationsmerkmal herangezogen wird. Diese Spektroskopie in Kombination mit dem Laserbohren erlaubt es schnell *in situ* Messergebnisse zu erhalten, insbesondere von Substanzen, die sich in Hohlkörpern befinden. Eine Klassifizierung von im Boden verborgenen Gegenständen und damit eine Verifikation des Gegenstandes als Mine ist somit ohne Probenentnahme oder Probenaufbereitung möglich. Das hier beschriebene Verfahren eignet sich daher vorzüglich als ergänzende Diagnostik bei den derzeit eingesetzten konventionellen und handgeführten Minensuchnadeln. Es trägt entscheidend zur Verbesserung der Sicherheit des Minenräumers bei und erhöht die Geschwindigkeit bei der Identifizierung und Räumung von Minenfeldern signifikant. Die Integration der Lasertechnik in eine konventionelle und handgeführte Minensuchnadel wird durch den Einsatz leistungsstarker und miniaturisierter Laserstrahlquellen in Verbindung mit Lichtleitertechnik und der Anwendung neuronaler Netzwerke bei der Datenerfassung und -auswertung ermöglicht.

Die physikalische Grundlage des Verfahrens ist die zeitaufgelöste messtechnische Erfassung von Lichtintensitäten zu unterschiedlichen Zeitpunkten und Zeitbereichen beispielsweise der CN-Emission nach einer zu Beginn erfolgenden Materialablation, die solange fortgesetzt werden sollte, wie unter einer Deckschicht Sprengstoff vermutet werden muß. Ein Indiz für das Fehlen von Sprengstoff ist das Erfassen von Boden (Erde, Lehm oder dergleichen) bzw. Luft nach Durchdringung der Deckschicht. Dieses kann entweder mechanisch (Bohrer, Luft- oder Wasserstrahl) aber auch laserinduziert, bevorzugt mit dem für die Diagnostik eingesetzten Laser, erfolgen. Es kann aber auch notwendig sein, zunächst den Boden (oder Straßenasphalt) zu durchdringen (mit den oben beschriebenen Methoden), bevor man zum (anderweitig erfassten) metallischen Objekt vordringt, um es zu klassifizieren.

Insbesondere ist mit dieser Methode es nunmehr möglich, schnell, berührungslos und mit vergleichsweise einfacher Apparatur unterschiedliche Explosionsstoffe (z. B. HNS und TNT) von Kunststoffen, organischen Bodeninhaltsstoffen und Metallen signifikant zu unterscheiden. Im Gegensatz zu den o. g. konventionellen Möglichkeiten handelt es sich hierbei um eine vergleichsweise kostengünstige Lösung, die durch den Einsatz miniaturisierter Lasertechniken möglich ist und so eine berührungslose online und *in situ* Klassifizierung verschiedenster Materialien in unterschiedlichen Medien ermöglicht.

Technisch besonders interessant ist die Kombination der beschriebenen spektroskopischen Diagnostik zur Klassifizierung von Explosivstoffen mit der Möglichkeit des lasergestützten Bohrens, wenn diese Technik in eine handgeführte, konventionelle Minensuchnadel integriert wird. Für Laserpulsenergien > 1 mJ/Puls ist laserinduzierter Materialabtrag bereits in einem kollimierten Lichtstrahl, also ohne zusätzliche Fokussieroptik, möglich, so dass ein Tiefenbereich von beispielsweise <10 cm ohne Nachführung einer Optik für die Diagnostik abgetastet werden kann, was in Hinblick auf 100% Verifikation von Minen/Explosivstoff von großem Vorteil ist. Alternativ dazu, kann durch das Kontaktieren von geeigneten Gradientenindexlinsen oder Kugellinsen auf die Endfläche der zur Übertragung der Laserstrahlung genutzten Lichtleitfaser ein Selbstreinigungseffekt erzeugt werden, bei dem das im Fokus der Laserstrahlung erzeugte Plasma auch zu einer Verdampfung von möglichen Staubpartikeln auf der Oberfläche der jeweiligen Optik führt und diese damit automatisch sauber hält.

Insbesondere wird vorgeschlagen, eine Anregung im Infrarotbereich vorzunehmen und mit Pulsenergien bereits im µJ-Bereich im Infrarot bei Wellenlängen von beispielsweise 1053 nm oder 1064 nm auch durch die Ummantelung von Minen hindurchzubohren, um festzustellen, ob sich Sprengstoff im Inneren befindet, oder es sich um ein sonstiges Stück Metall handelt. Beim Laserbohren kann alternativ als Laseranregungsquelle ein Laser mit einer Anregung im ultravioletten Spektralbereich (z.B. 248 nm) verwendet werden, da im ultravioletten Spektralbereich für verschiedene zu durchdringende Materialien der Materialabtrag beim Laserbohren effizienter ist.

Für Laseranregungswellenlängen im Spektralbereich 248 - 1064 nm werden als dominante Emissionen Linien bei 388 und 248 nm beobachtet, die dem CN-Molekül bzw. dem Kohlenstoff zugeordnet werden können. Bei einzelnen Substanzen, z.B. dem HNS Explosivstoff, werden zusätzlich signifikante Calcium (Ca) Linien beobachtet, die herstellungsbedingt als Verunreinigung bei HNS auftreten können. Ein Nachweis derartiger Spurenelemente in Explosivstoffen gibt zusätzliche Informationen bzgl. der Herkunft dieser Substanzen, die ebenfalls bei der Verifikation genutzt werden können.

Eine eindeutige Klassifizierung verschiedener Explosivstoffe und Kunststoffe wird erfindungsgemäß möglich, wenn der zeitliche Verlauf der lichtinduzierten Plasmaemission für die C- und CN-Linie gemessen wird. Dazu werden vorteilhafterweise zwei oder mehrere Zeitfenster von einer typischen Dauer im Bereich zwischen 10 und 100 ns bezogen auf den Zeitpunkt des anregenden Lichtpulses gesetzt. Der Abstand der Zeitfenster liegt zwischen 0 und typischerweise 100 ns. Die Messung der lichtinduzierten Plasmaemission erfolgt in diesen Zeitfenstem. Die Dauer und die Positionierung der Zeitfenster werden für die jeweiligen Laserparameter optimiert und anschließend fest eingestellt. Das Verhältnis der in den Zeitfenstem gemessenen Lichtintensitäten wird erfindungsgemäß für die Klassifizierung der zu untersuchenden Substanzen herangezogen.

Die CN-Linie wird sowohl bei den Explosivstoffen TNT wie HNS registriert, da Kohlenstoff und Stickstoff die Hauptbestandteile der Explosivstoffe sind und sie sich in Plasma in der Rekombinationsphase miteinander verbinden. Vergleichende Messungen unter Vakuumbedingungen zeigen, dass diese CN-Emission nicht beobachtet wird. Daher wird davon ausgegangen, dass bei der Plasmazündung und in der sich anschliessenden Rekombinationsphase die N-Atome aus der Luft mit den C-Atomen der Explosivstoffe CN bilden.

Die Pulslänge der Laseranregung im Infraroten Spektralbereich (1053 bzw. 1064 nm) beträgt typischerweise <500 ps bei einer geringen Pulsenergie von 50 µJ, wodurch sich bereits bei sämtlichen zur Verfügung stehenden Explosivstoffen, Kunststoffen und Bodenproben intensive Plasmen erzeugen ließen. Dabei sind die geometrischen Abmessungen dieser Plasmen so klein, dass es nicht zu einer Zündung des Sprengstoffes kommen kann, auch nicht, wenn Materialablation zur Durchdringung der Aussenhülle zuvor stattfindet.

Weitere Vorteile und Merkmale der Erfindung ergeben sich aus nachfolgender Beschreibung eines bevorzugten Ausführungsbeispiels anhand der beigefügten Zeichnung. Dabei zeigen:
- Fig. 1: Ausführungsform einer laserunterstützten konventionellen und handgeführten Minensuchnadel.
- Fig. 2: Beispiel einer möglichen Ausführungsform für einen Verschluss der Minensuchnadel zum Schutz vor Verschmutzung der Optik während des handgeführten Einsatzes beim Sondieren.
- Fig. 3: Ein weiteres Beispiel der möglichen Ausführungsform für einen Verschlusses der Minensuchnadel zum Schutz vor Verschmutzung der Optik während des handgeführten Einsatzes beim Sondieren.
- Fig. 4: Klassifikationsmerkmal zeitaufgelöste LIBS Intensitäten der CN-Emission nach Laseranregung bei 1064 nm für (a) und (b) TNT und (c) und (d) Kunststoff (Polyamid (PA)). Die Abbildungen (a) und (c) zeigen jeweils spektral und zeitaufgelöste LIBS Emissionen im Spektralbereich 200 bis 500 nm, (b) und (d) die jeweilige zeitaufgelöste Auswertung für die CN-Emission bei 388 nm.
- Fig. 5: Beispiel der zeitintegrierten Datenauswertung für die CN-Emission bei 388 nm nach Laseranregung bei 1064 nm für die Explosivstoffe TNT und HNS sowie für Polyamid (PA). In (a) ist die charakteristische LIBS Emission des CN gezeigt, in (b) die zeitintegrierte LIBS Datenauswertung für die CN-Linie bei 388 nm für die verschiedenen Proben.

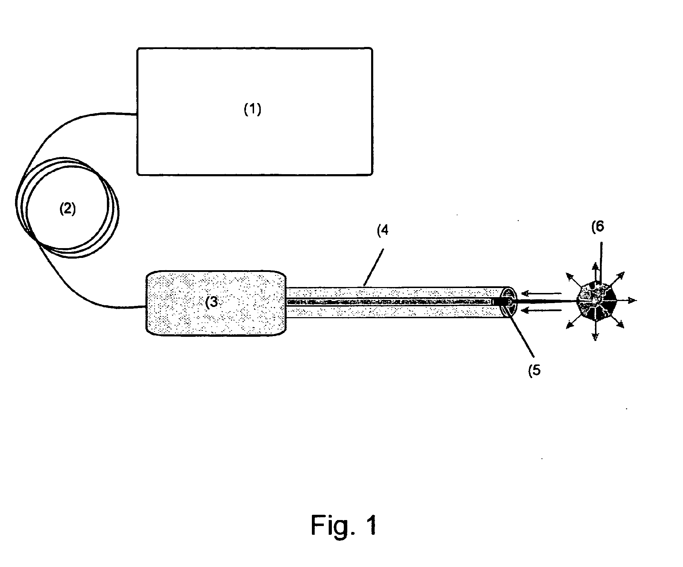

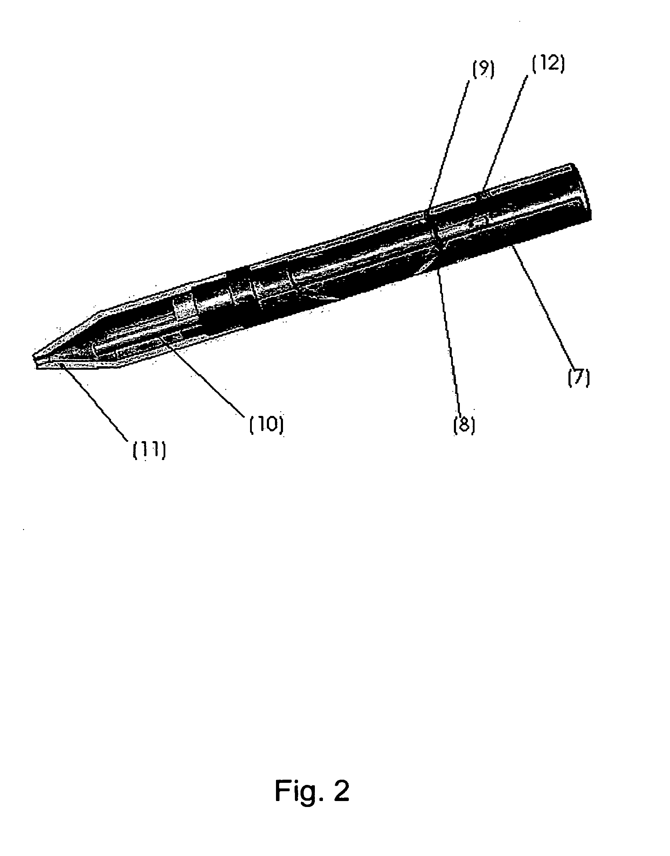

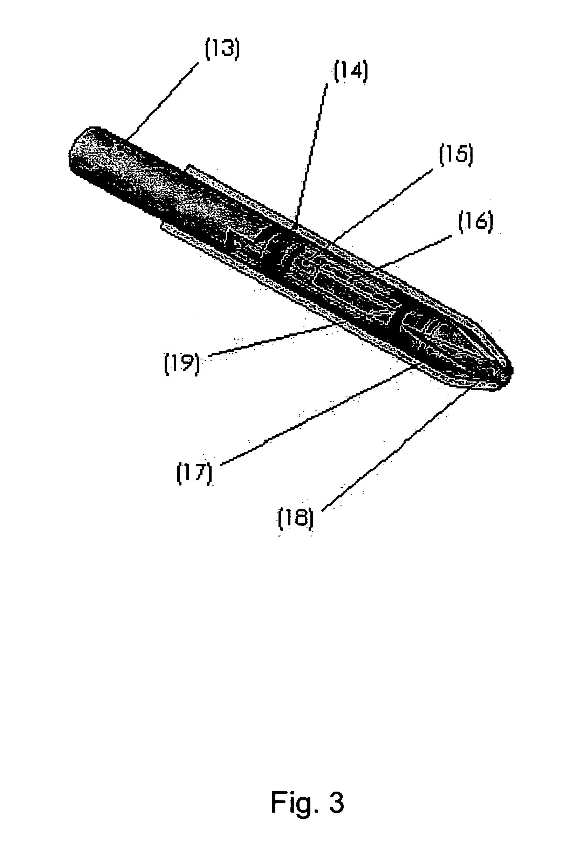

Die in der Fig. 1 schematisch dargestellte Anordnung der laseroptischen Minensuchnadel zeigt die Steuereinheit des Systems (1) inklusive eines passiv gütegeschalteten Cr4+:Nd:YAG-Mikrochiplasers in Kombination mit einem Diodenlaser-gepumpten Ytterbium Faserverstärker zur Nachverstärkung der Lichtimpulse. Zur Übertragung der Pumpstrahlung sowie zur Rückführung des Signallichtes zum Detektor wird ein optisches Lichtleitersystem (2) eingesetzt, das gegebenenfalls durch eine geeignete Faserkupplung am Handgriff (3) der Minennadel zu trennen ist. Die eigentliche Minennadel (4) besteht aus einem Titan- oder anderem nichtmagnetischem Metallrohr in dessen Bohrung die Lichtleiter geführt sind; ein zusätzlicher Hohlraum zum Einströmen von Gasen oder Druckluft ist vorgesehen. In die Spitze der Minennadel integriert befindet sich ein Verschlussmechanismus, wie in Fig. 2 oder Fig. 3 dargestellt. An der Spitze der Lichtleiter befindet sich eine geeignete Fokussieroptik (5), die zum einen die Laserstrahlung in den Plasmabereich (6) fokussiert und zum anderen das vom Plasma emittierte Licht in eine oder mehrere Beobachtungsfasem einkoppelt, die bevorzugt ringförmig um die Anregungsfaser angeordnet sind.

In Fig. 2 und Fig. 3 sind zwei mögliche Ausführungsformen geeigneter Verschlussmechanismen gezeigt. Bei der erfindungsgemäßen Anordnung in Fig. 2 werden über ein Getrieberohr (7) mit zwei gegenläufig ausgeführten Kulissenführungen (8,9) je nach Drehrichtung ein Vorschub eines biegsamen Verschlussbolzens (10) zum Abdichten der Nadelspitze (11) während des mechanisch und abrassiv belastendenden groben Sondierprozesses im Boden, sowie des Führungsrohres der optischen Fasern (12) zur Erzeugung des laserinduzierten Plasmas mit einem definierten Abstand zur Nadelspitze, erreicht. Durch vorgesehene Öffnungen in den Führungen des Bolzens bzw. des Faserrohres ist eine Zuführung von Druckluft oder geeigneter Gase auf den Brennpunkt möglich, die zum einen die Materialablation und damit die Laserbohreffizienz erhöhen sowie zum anderen einen zusätzlichen Schutz der Optiken vor einer Verschmutzung gewährleisten können. In der zweiten erfindungsgemäßen Ausführung in Fig. 3 wird über einen Drehantrieb (13), gelagert in dem Außenrohr der Minennadel (14) je nach Drehrichtung über ein Links- (15) und ein Rechtsgewinde (16) ein Spangenverschluß (in der Abbildung im geöffneten Zustand gezeigt) (17) oder das Führungsrohr der optischen Fasern (18) in die Spitze der Minennadel gefahren. Ein O-Ring (19) dient zur äußeren Abdichtung der Drehmechanik, so dass von der Rückseite eingeleitete Gase oder Druckluft nur durch vorgesehenen Öffnungen in der Gewindeanordnung in Mitte der Nadel gezielt zur Spitze geleitet werden.

Beide Anordnungen lassen sich aus nichtmagnetischen Materialien, wie Kohlefaserkunststoffen, Titan usw. in den notwendigen Haltbarkeiten fertigen, so dass durch die Integration der Optiken und Verschlussmechanismen keinerlei Änderung in der Handhabung im Vergleich zu einer herkömmlichen Minensuchnadel zu berücksichtigen sind.

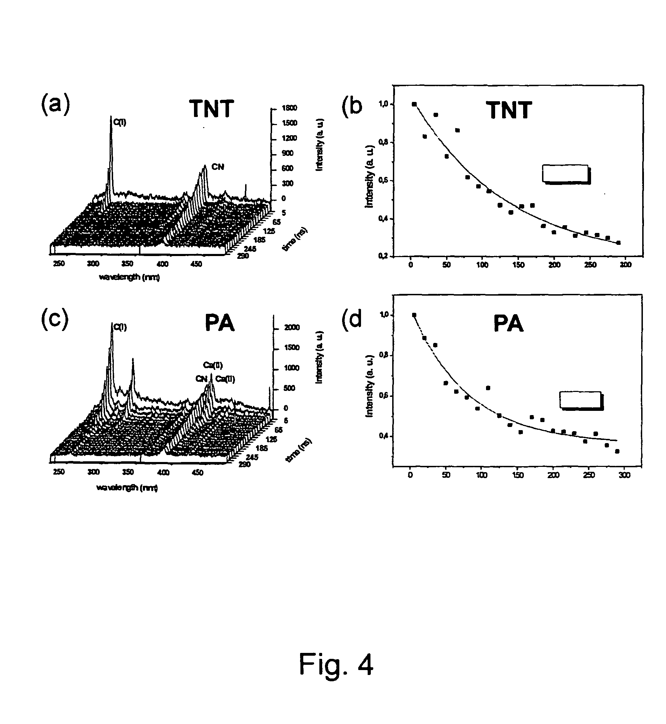

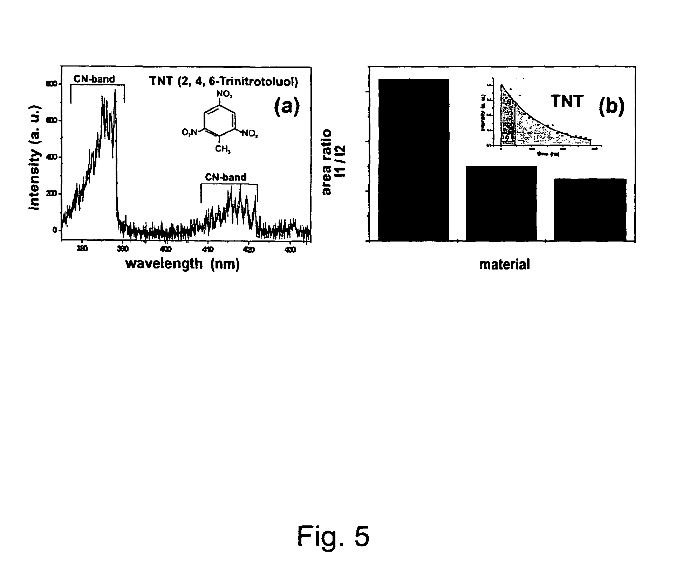

Der spektrale Verlauf eines typischen LIBS-Emissionsspektrums für den Explosivstoff TNT nach Anregung bei 1064 nm ist in der Fig. 5(a) gezeigt. Sehr deutlich erkennbar sind die CN-Banden, eine starke im Wellenlängenbereich von 380 nm bis 390 nm sowie eine schwächere zwischen 410 nm und 420 nm. Es wird unter sämtlichen Bedingungen die CN-Linie beobachtet, das heißt, Kohlenstoff- und Stickstoffatome werden in dem Plasma erzeugt, die dann zu CN in der Rekombinationsphase des Plasmas reagieren. Eine Unterscheidung der Explosivstoffe und Kunststoffe kann bereits durch zeitaufgelöste Aufnahme der LIBS-Intensitäten bei 388 nm vorgenommen werden. Für diese Stoffe werden signifikant unterschiedliche Emissions-Abklingzeiten beobachtet, wie in Fig. 4 exemplarisch für TNT und Polyamid gezeigt. Durch die zeitintegrierte (vgl. Fig 5((b)) Registrierung von Intensitätswerten in mindestens zwei unterschiedlichen Zeitfenstem sowie deren anschließende Verhältnisbildung lassen sich stoffspezifische Klassifizierungskennzahlen festlegen und in einer Datenbank speichern; durch den Vergleich gemessener Werte mit den Datenbankwerten in einem rechnergestützten Programm kann eine schnelle und signifikante Indentifikation des untersuchten Materials vorgenommen werden.

Bei gleichbleibenden Anregungsbedingungen, ohne dass es zu einem Durchstimmen des Lasers oder Veränderung der Intensität kommen muß, werden die verschiedenen untersuchten Proben zu unterschiedlichen Plasmatemperaturen gelangen, so dass sich ein unterschiedlicher, zeitlicher Verlauf ausbildet. Es wurden mit Hilfe sogenannter Boltzmann-Plot Auswertungen Temperaturbestimmungen durchgeführt, die Plasmatemeraturen zwischen 2500 und 12000 K ergaben.

Weiter ergaben die Messungen, dass bereits Pulsenergien im µJ-Bereich zur Zündung des Plasmas ausreichen und auch ein Bohren durch die allermeisten Substanzen hindurch möglich ist. Bevorzugt wird eine Zündung des Plasmas im Infraroten bei 1064 nm durch ein passiv gütegeschalteten Mikrochiplaser und eine zeitintegrierte Beobachtung der LIBS-Intensitäten bei 388 nm, woraufhin eine zeitintegrierte Auswertung der Intensitäten als Klassifikationsmerkmal verschiedener Explosivstoffe untereinander aber auch von Kunststoffen sowie organischen Materialien, wie dem Boden oder Holz ermöglicht wird. Als Anregungslichtquelle wird ein Cr4+:Nd:YAG-Mikrochiplaser mit einer Wiederholrate von 20 kHz und einer Pulsdauer von weniger als einer Nanosekunde bei einer Wellenlänge von 1064 nm vorgeschlagen. Mit Hilfe von Diodenlaser-gepumpten Ytterbium Faserverstärkern ist eine Nachverstärkung der Lichtimpulse bis in den mJ-Energiebereich möglich. Mit einer derartigen Anordnung wurden mittlere Leistungen von bis zu 5 W erreicht.

Das der laseroptischen Minensuchnaldel erfindungsgemäß zugrundeliegende Verfahren zur berührungslosen Klassifizierung von Materialien besteht zunächst im Erzeugen eines Plasmas an der Oberfläche des Stoffes durch Aufbringen von Lichtimpulsen einer Laserlichtquelle, dem Erfassen der vom Plasma ausgesandten Energie bei geeignet gewählten Beobachtungswellenlängen, und einer zeitintegrierten Beobachtung der LIBS-Intensitäten bei wenigstens zwei Zeitfenstern und einer definierten Wellenlänge (vgl. Fig. 5).

Eine der Anregungswellenlängen im Infraroten zwischen 1050 und 1070 nm, z.B. bei 1064 nm wird bevorzugt und eine gepulste Anregung mit Pulsenergien von mehr als 1 µJ und einer Pulsfolgefrequenz von mehr als 100 Hz. Eine Beobachtung sollte in dem Spektralbereich von 248 und 388 nm bevorzugt erfolgen und zwei Zeitfenster im Bereich von 10 bis 100 ns und 0 bis 100 ns nach der Zündung des Plasmas in denen zeitintegriert beobachtet wird und deren "counts" ins Verhältnis gesetzt werden, können zur einfachen Klassifizierung herangezogen werden (vgl. Fig. 5(b)). Wegen der Verhältnisbildung ist eine genaue Kenntnis der Plasma- und Anregungsparameter bei diesem Verfahren für die Klassifizierung nicht erforderlich.

Vor einer Klassifizierung des potentiellen Sprengstoffs kann mit gleicher Laserenergie eine laserinduzierten Durchdringung eines Deckmaterials bei gleichzeitiger Klassifizierung dieses Materials betrieben werden.

Falls dienlich kann mit zusätzlicher zeitaufgelöster Erfassung der Lichtemission bei einer Beobachtungswellenlänge auf die Temperatur des erzeugten Plasmas geschlossen werden, und dies als weitere Klassifizierungshilfe herangezogen werden.

Bei der zeitintegrierten Erfassung der Lichtemission in zwei unterschiedlichen Zeitintervallen und Zeitpunkten, relativ zum Lichtimpuls und anschließende numerische Berechnung der relativen Verhältnisse der zeitintegriert gemessenen Lichtintensitäten sowie rechnergestützten Abgleich mit zuvor für unterschiedliche Materialien bestimmten Verhältnissen kann eine schnelle Klassifizierung von Explosivstoffen unter Anwendung der bisher konventionellen Sondierungstechniken mit einer handgeführten Minensuchnadel erfolgen. Die Optik wird während des Sondierprozesses im Boden durch einen mechanischen Verschluss geschützt, der nach Kontakt mit einem Gegenstand manuell oder elektronisch geöffnet wird um die Laserdiagnostik einschließlich des Laserbohrens zu ermöglichen. Dieses Verfahren ermöglicht prinzipiell eine 100%ige Verifikation der Mine und ermöglicht damit einer schnellen und sicheren Räumung.

Durch den Einsatz miniaturisierter Lasertechnik und Elektronik für die Datenerfassung, - Verarbeitung und -Auswertung ist es möglich, eine handgeführte Minensuchnadel auf der Grundlage der vorliegenden Erfindung aufzubauen, welches zukünftig die derzeit meistens eingesetzte klassische Minennadel ersetzt. Die Vorteile einer derartigen "intelligenten" Minensuchnadel liegen auf der Hand.

## Patentansprüche

1. Vorrichtung zum Auffinden und zur berührungslosen Klassifizierung von Minen und Explosionsstoffen mit einem Laserstrablaustrittsrohr aus einem zylindrischen Körper mit einer Optik, **dadurch gekennzeichnet, daß**
das aus einem nicht-magnetischen Stoff gefertigte, mit einer Spitze versehene Getrieberohr (7) des Laserstrahlaustritts als eine Minensuchnadel (14) ausgebildet ist, und
die in die Minensuchnadel (14) integrierte, in der Spitze (11) der Nadel angeordnete Fokussieroptik (5) als Einrichtung zum Erzeugen eines Plasmas an der Oberfläche des zu untersuchenden. Gegenstands ausgebildet ist, durch Aufbringen von Lichtimpulsen mit mittleren Leistungen von bis zu 5 W einer Laserlichtquelle auf das zu untersuchende Material und
**dass** die Vorrichtung eine über optische Fasern (18) in der Minennadel angekoppelte Einrichtung zum Erfassen, der Spektralcharakteristik der vom Plasma ausgesandten Energie und zur zeitintegrierten Beobachtung der Plasmaemission bei wenigstens zwei definierten Wellenlängen aufweist.

2. Vorrichtung zum Auffinden von Minen nach Anspruch 1, **dadurch gekennzeichnet, dass** insbesondere die Plasmaemission von Verbindungen, die jedoch erst während des lichtinduzierten Plasmaprozesses entstehen, wie beispielsweise dem CN, als wesentliches Klassifizierrungsmerkmal zur Verifikation einer Mine bzw. von Explosivstoff, herangezogen wird.

3. Vorrichtung zum Auffinden von Minen nach Anspruch 1 oder 2, **dadurch gekennzeichnet, dass** die Nadel mit einer Einrichtung zum Exponieren der Optik bei Erkennen eines verdächtigen Gegenstands erfolgender manueller Betätigung versehen ist.

4. Vorrichtung zum Auffinden von Minen nach einem der vorangehenden Ansprüche, **dadurch gekennzeichnet, dass** die Laserlichtquelle eine Anregungswellenlänge im Spektralbereich von Ultraviolett bis ins Infrarot erzeugt und die Anregung mit Pulsenergien von mindestens 50 µJ gepulst erfolgt.

5. Vorrichtung zum Auffinden von Minen nach einem der vorangehenden Ansprüche, **dadurch gekennzeichnet, dass** die Einrichtung zum Erfassen der Intensität der Plasmaemission in dem Spektralbereich von 200 und 500 nm arbeitet.

6. Vorrichtung zum Auffinden von Minen nach einem der vorangehenden Ansprüche, **dadurch gekennzeichnet, dass** die Einrichtung zum Erfassen der Intensität der Plasmaemission, diese in wenigstens zwei Zeitfenstern im Bereich von 10 bis 100 ns und 0 bis 100 ns nach der Zündung des Plasmas für wenigstens eine Spektrallinie beobachtet.

7. Vorrichtung zum Auffinden von Minen nach einem der vorangehenden Ansprüche, **dadurch gekennzeichnet, dass** die Einrichtung zur Erfassung der Intensität der Plasmaemission zur numerischen Berechnung der relativen Verhältnisse der zeitintegriert gemessenen Lichtintensitäten sowie zum rechnergestützten Abgleich mit zuvor für unterschiedliche Materialien bestimmten Verhältnissen eingerichtet ist.

8. Vorrichtung zum Auffinden von Minen nach einem der vorangehenden Ansprüche, **dadurch gekennzeichnet, dass** die Nadel zur laserinduzierten Durchdringung eines Deckmaterials des Gegenstandes bei gleichzeitiger Klassifizierung dieses Deckmaterials eingerichtet ist.

9. Vorrichtung zum Auffinden von Minen nach einem der vorangehenden Ansprüche, **dadurch gekennzeichnet, dass** die Einrichtung zur zusätzlichen, zeitaufgelösten Erfassung der Intensität der Plasmaemission bei wenigstens einer Beobachtungswellenlänge eingerichtet ist.

10. Vorrichtung zum Auffinden von Minen nach einem der vorangehenden Ansprüche, **dadurch gekennzeichnet, dass** im hinteren Bereich der Minensuchnadel ein Lichtleiter für das Pumplicht und die Rückführung des detektierten Lichtes zur Steuereinheit vorgesehen ist.

11. Vorrichtung zum Auffinden von Minen mit einer Minensuchnadel, nach einem der vorangehenden. Ansprüche, **dadurch gekennzeichnet, dass** durch eine Einrichtung die Zuführung von Gas- oder Gasgemischen durch das Innere der Minensuchnadel auf die Oberfläche der Optik und die des zu untersuchenden Gegenstandes vorgesehen ist.

## Claims

1. A device for locating and contactlessly classifying mines and explosives using a laser beam exit tube made of a cylindrical body with a lens, **characterised in that**
the drive tube (7), made of non-magnetic material and provided with a tip, of the laser beam exit is configured as a mine search needle (14), and
the focusing lens (5) integrated in the mine search needle (14) and arranged in the tip (11) of the needle is configured as a facility for generating a plasma at the surface of the object to be examined, by applying light pulses with average powers of up to 5 W of a laser light source onto the material to be examined and
**in that** the device has a facility coupled, via optical fibres (18), with the mine needle for measuring the spectral characteristics of the energy emitted by the plasma and for the time-integrated observation of the plasma emission at at least two defined wavelengths.

2. The device for locating mines according to claim 1, **characterised in that**, in particular the plasma emission of compounds, which only arise however during the light-induced plasma process, such as CN, for example, is used as a substantial classification feature for verifying a mine or explosive material.

3. The device for locating mines according to claim 1 or 2, **characterised in that** the needle is equipped with a facility for exposing the lens upon manual actuation when a suspicious object is recognised.

4. The device for locating mines according to one of the preceding claims, **characterised in that** the laser light source generates an excitation wavelength in the spectral range from ultraviolet to Infrared and the excitation occurs in a pulsed manner with pulse energies of at least 50µJ.

5. The device for locating mines according to one of the preceding claims, **characterised in that** the facility for measuring the intensity of the plasma emission functions in the spectral region of 200 and 500nm.

6. The device for locating mines according to one of the preceding claims, **characterised in that** the facility for measuring the intensity of the plasma emission observes this in at least two time windows in the region of 10 to 100ns and 0 to 100ns in accordance with the Ignition of the plasma for at least one spectral line.

7. The device for locating mines according to one of the preceding claims, **characterised in that** the facility for measuring the intensity of the plasma emission is set up to numerically calculate the relative relationships of the light intensities measured in a time-integrated manner as well as to carry out a computer-supported comparison with relationships which have been previously determined for different materials.

8. The device for locating mines according to one of the preceding claims, **characterised in that** the needle is set up for the laser-induced penetration of a covering material of the object whilst simultaneously classifying this covering material.

9. The device for locating mines according to one of the preceding claims, **characterised in that** the facility is set up for the additional time-resolved measurement of the intensity of plasma emission at at least one observation wavelength.

10. The device for locating mines according to one of the preceding claims, **characterised in that** there is provided in the rear area of the mine search needle a light guide for the pumped light and the feedback of the detected light to the control unit.

11. The device for locating mines using a mine search needle, according to one of the preceding claims, **characterised in that**, by means of a facility, there is provided the feeding of gas or gas mixtures through the interior of the mine search needle onto the surface of the lens and that of the object to be examined.

## Revendications

1. Dispositif pour la détection et la classification sans contact de mines et d'explosifs comprenant un tube de sortie de faisceau laser formé d'un corps cylindrique avec une optique, **caractérisé en ce que**
le tube à engrenage (7) de la sortie de faisceau laser, qui est fabriqué dans un matériau non magnétique et muni d'une pointe, est réalisé sous la forme d'une aiguille de déminage (14), et
l'optique de focalisation (5) intégrée dans l'aiguille de déminage (14), disposée dans la pointe (11) de l'aiguille, est réalisée sous la forme d'un équipement conçu pour générer un plasma à la surface de l'objet à examiner par application d'impulsions lumineuses de puissances moyennes allant jusqu'à 5 W d'une source de lumière laser sur le matériau à examiner et
que le dispositif présente un équipement accouplé par des fibres optiques (18) dans l'aiguille de déminage pour saisir la caractéristique spectrale de l'énergie émise par le plasma et observer de manière intégrée dans le temps l'émission de plasma à au moins deux longueurs d'onde définies.

2. Dispositif pour la détection de mines selon la revendication 1, **caractérisé en ce que** l'on utilise comme critère de classification essentiel pour la vérification d'une mine ou d'un explosif en particulier l'émission de plasma de composés qui n'apparaissent cependant que pendant le processus plasma induit par la lumière, comme par exemple le CN.

3. Dispositif pour la détection de mines selon la revendication 1 ou 2, **caractérisé en ce que** l'aiguille est munie d'un équipement pour exposer l'optique en cas de réalisation d'un actionnement manuel lors de l'identification d'un objet suspect.

4. Dispositif pour la détection de mines selon l'une des revendications précédentes, **caractérisé en ce que** la source de lumière laser génère une longueur d'onde d'excitation dans le domaine spectral allant de l'ultraviolet à l'infrarouge et l'excitation se produit de manière pulsée avec des énergies d'impulsion d'au moins 50 µJ.

5. Dispositif pour la détection de mines selon l'une des revendications précédentes, **caractérisé en ce que** l'équipement pour la saisie de l'intensité de l'émission de plasma travaille dans le domaine spectral de 200 et 500 nm.

6. Dispositif pour la détection de mines selon l'une des revendications précédentes, **caractérisé en ce que** l'équipement pour la saisie de l'intensité de l'émission de plasma observe celle-ci dans au moins deux fenêtres temporelles dans la plage de 10 à 100 ns et 0 à 100 ns après l'amorçage du plasma pour au moins une raie spectrale,

7. Dispositif pour la détection de mines selon l'une des revendications précédentes, **caractérisé en ce que** l'équipement pour la saisie de l'intensité de l'émission de plasma est conçu pour le calcul numérique des rapports relatifs des intensités lumineuses mesurées de manière intégrée dans le temps ainsi que pour la comparaison assistée par ordinateur avec des rapports préalablement déterminés pour différents matériaux.

8. Dispositif pour la détection de mines selon l'une des revendications précédentes, **caractérisé en ce que** l'aiguille est conçue pour la pénétration induite par laser d'un matériau de recouvrement de l'objet et pour la classification simultanée de ce matériau de recouvrement.

9. Dispositif pour la détection de mines selon l'une des revendications précédentes, **caractérisé en ce que** l'équipement est conçu pour la saisie à résolution temporelle supplémentaire de l'intensité de l'émission de plasma à au moins une longueur d'onde d'observation.

10. Dispositif pour la détection de mines selon l'une des revendications précédentes, **caractérisé en ce qu'**un guide de lumière pour la lumière de pompage et le retour de la lumière détectée vers l'unité de commande est prévu dans la partie arrière de l'aiguille de déminage.

11. Dispositif pour la détection de mines, avec une aiguille de déminage, selon l'une des revendications précédentes, **caractérisé en ce qu'**il est prévu par un équipement l'amenée de gaz ou de mélanges gazeux à travers l'intérieur de l'aiguille de déminage sur la surface de l'optique et celle de l'objet à examiner.
